# EUROPÄISCHE PATENTSCHRIFT

(11) **EP 1 826 540 B1**
(45) Veröffentlichungstag und Bekanntmachung des Hinweises auf die Patenterteilung: **19.12.2012**
(21) Anmeldenummer: 07003420.2
(22) Anmeldetag: 19.02.2007
(51) Int. Cl.: G01G 23/01

(54) **Verfahren zum Austauschen von Wägezellen**
Method for exchanging load cells
Procédé destiné à remplacer des cellules de charge

(30) Priorität: 23.02.2006 DE 102006009005
(43) Veröffentlichungstag der Anmeldung: 29.08.2007
(73) Patentinhaber: Schenck Process GmbH, 64293 Darmstadt (DE)
(72) Erfinder: Rauchschwalbe, Ulrich, Dr., 64846 Gross-Zimmern (DE)

(56) Entgegenhaltungen:
- EP-A- 0 670 479
- DE-A1- 10 311 293
- DE-C1- 10 227 121
- GB-A- 2 167 561
- GB-A- 2 191 001
- US-A- 4 804 052
- US-A- 5 780 782
- ANONYMOUS: 'Smart Wägezellen-Systeme', [Online] 30 Oktober 2003, XP055001486 Gefunden im Internet: <URL:http://revere.cc/domains.revere/Revere /Application%20Notes/German/15%20Smartew%C3 %A4gesysteme.PDF> [gefunden am 2011-06-28]

## Beschreibung

Die Erfindung betrifft ein Verfahren zum Austauschen von Wägezellen in einer geeichten Wägeanordnung mit mehreren Wägezellen und eine Vorrichtung zur Durchführung eines solchen Verfahrens.

Aus der DE 102 27 121 C1 ist eine Verfahren zum Austauschen von Wägezellen in einer geeichten Wägeanordnung mit mehreren digitalen Wägezellen bekannt, wobei die Wägezellen mit einer Steuereinheit über ein Bussystem verbunden sind. Dabei stellen die digitalen Wägezellen Gewichtswerte in Form von Zählerwerten zur Verfügung. Weiterhin weist jede Wägezelle einen Satz eichrelevanter Wägezellenparameter pro Wägezelle der Wägeanordung auf, die in einem Parameterspeicher abgelegt sind. Bei einem Austausch verbleibt mindestens eine der bisherigen Wägezellen in der Wägeanordnung. Nach dem erfolgten Austausch wird über die zentrale Steuereinheit anhand der Daten der ausgetauschten Wägezelle, die die Steuereinheit von der in der Anordnung verbliebenen Wägezelle erhält,: für die eingewechselte Wägezelle ein neuer Parametersatz ermittelt und in den Parameterspeichern aller Wägezellen abgelegt.

Nach der DE 102 27 121 C1 wird in den digitalen Wägezellen bereits intern die Analog-Digital-Wandlung vorgenommen und das Ergebnis der Wandlung seriell zur Verfügung gestellt. Aus mehreren Gründen erscheinen solche Wägezellen nachteilig zu sein, weil alle bekannten digitalen Wägezellen ein herstellerspezifisches Protokoll besitzen und diese daher untereinander nicht kompatibel sind. Weiterhin ist es nicht empfehlenswert, in jede Wägezelle eine aktive Elektronik einzubauen. Eine solche Lösung verursacht auf der einen Seite unnötige Herstellungskosten und vergrößert auf der anderen Seite die Gefahr eines Ausfalls einer solchen aktiven Elektronik.

Darüber hinaus sind Anordnungen von mehreren digitalen Wägezellen umständlich in der Datenabfrage zu handhaben, wodurch die Aktualisierungsrate der gewonnenen Messwerte begrenzt wird.

Aus EP 0 670 479 A1 ist eine digitale Wägezelle bekannt, welche mit einer lokalen Schaltungseinrichtung verbunden ist, wobei die Wägezelle eine Einrichtung zum Aufnehmen und Umwandeln analoger Darstellungen in digitale Darstellungen von an die digitale Wägezelle angelegten Kräften aufweist. Weiterhin ist eine Einrichtung zum Anwenden digitaler Korrekturfaktoren auf die digitalen Darstellungen vorgesehen, wobei ein Kraftaufnehmer, eine Wandlereinrichtung und eine Einrichtung zum Speichern der digitalen Korrekturfaktoren angeordnet sind. Dabei ist die Speichereinrichtung dauerhaft an dem Kraftaufnehmer befestigt und von der lokalen Schaltungseinrichtung entfernt angeordnet. Die lokale Schaltungsanordnung ist lösbar an der Speichereinrichtung angeschlossen.

Weiterhin ist das Dokument Anwender-Info 05/0-15/01D "Smart Wägezellen-Systeme" bekannt, wonach für industrielle Wägeapplikationen vorwiegend analoge DMS-Wägezellen eingesetzt werden. Die technologischen Grundlagen dieser Systeme sind bekannt. Analoge Systeme bieten zudem die weitgehende Standardisierung, insbesondere des Ausgangssignals und damit einfache Anschlussmöglichkeiten der Systemkomponenten untereinander. Die ersten kommerziellen Wägezellen mit eingebauter Elektronik wurden von Firmen entwickelt, die sowohl Wägezellen als auch Waagen herstellen und somit das Gesamtsystem, nämlich Wägezellen, Elektronik und Mechanik, überblicken. Dies bietet Vorteile in der Herstellung und beim Feldeinsatz.

Aus DE 103 11 293 A1 ist eine Wägevorrichtung bekannt, die einen Kraftaufnehmer mit einer Wandlereinrichtung, einer über ein Verbindungskabel mit der Wandlereinrichtung verbundenen Auswerteelektronik und einer Speichereinrichtung zum Speichern individueller, den Kraftaufnehmer charakterisierender Daten umfasst. Dem Kraftaufnehmer zugeordnet ist ein Informationsträger, der als ein Transponder ausgebildet ist. Der Transponder kann dabei Teil eines Etiketts sein, das lösbar bzw. abreißbar an dem Kraftaufnehmer befestigbar ist. In dem Speicher des Transponders sind die individuellen, den Kraftaufnehmer charakterisierenden Daten gespeichert. Bei der bekannten Wägevorrichtung ist nachteilig, dass der Transponder als Teil eines Etiketts ausgelegt ist, das lösbar und damit verlierbar oder verwechselbar an dem Kraftaufnehmer befestigbar ist.

Die der Erfindung zugrundeliegende Aufgabe besteht darin, das bekannte Verfahren zum Austausch von Wägezellen dahingehend zu verbessern, dass der Austausch erleichtert und unverwechselbar und kostengünstiger gestaltet wird, und eine Vorrichtung zur Durchführung eines solchen Verfahrens anzugeben.

Die Aufgabe wird erfindungsgemäß mit den Merkmalen des Patentanspruchs 1 gelöst. Eine Vorrichtung zur Durchführung des Verfahrens nach Anspruch 1 wird mit den Merkmalen des Anspruchs 19 gelöst. Weitere bevorzugte Ausgestaltungen der Erfindung sind in den abhängigen Ansprüchen angegeben.

Es hat sich als besonderes vorteilhaft herausgesellt, dass die Wägezellen mit einer Steuereinheit über mindestens ein Bussystem verbunden sind, wobei in den Wägezellen ein abfragbarer Parameterspeicher integriert ist, der vorzugsweise als read-only-memory oder Festwertspeicher ausgelegt ist. Dadurch kann auf eine aufwendige mechanische oder elektrische Kompensation verzichtet werden, um Ungenauigkeiten einer Wägezelle zu minimieren, wie beispielsweise die Parameter Temperatureinfluss, Nichtlinearität, Hysterese oder Kriechen. Die Daten der erwähnten Parameter werden lediglich gemessen und in einem internen Parameterspeicher der Wägezelle abgelegt.

Die Steuereinheit ist über eine oder mehrere Busleitungen mit der Wägezelle verbunden. Auf dem Weg kann die Steuereinheit sowohl analoge elektrische Messsignale erfassen, als auch die in der Wägezelle gespeicherten Daten der angegebenen Parameter unter anderem auslesen.

Im Betrieb liest die Steuereinheit Daten der Parameter aus dem internen Parameterspeicher aus und korrigiert die Rohwerte anhand dieser Daten. Auf die angegebene Weise werden nicht nur die Messergebnisse der Wägezellen verbessert, sondern auch erhebliche Kosten für den sonst fälligen Abgleich bei den digitalen Wägezellen eingespart.

Mit dem vorteilhaften Verfahren ist es auch möglich, eine oder mehrere oder alle Wägezellen einer Wägeanordnung zu tauschen. Ausdrücklich muss keine einzelne Wägezelle in der Wägeanordnung verbleiben. Die Steuereinheit liest die Daten der Parameter aus dem Parameterspeicher der neuen Wägezellen aus und berechnet daraus neue Korrekturdaten. Auf diese Weise kann unter Umständen ohne eine neue Justage und ohne irgendeinen Verlust an Genauigkeit und gegebenenfalls auch ohne eine neue Eichung der Wägevorgang fortgesetzt werden.

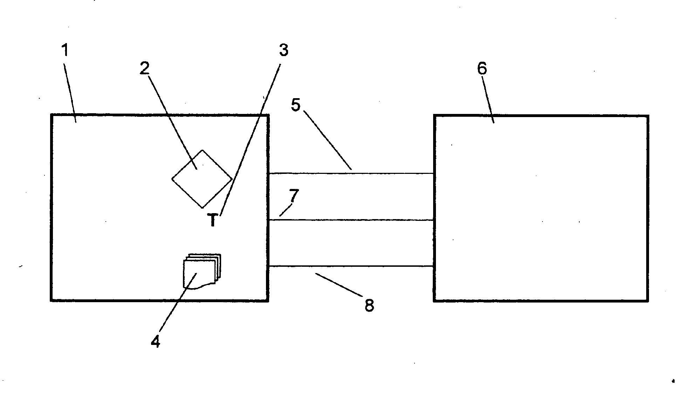

Weitere Vorteile der Erfindung sind anhand eines in der Zeichnung dargestellten Ausführungsbeispiels näher erläutert.

Die einzige Figur zeigt ein Blockschaltbild mit einer erfindungsgemäßen analogen Wägezelle, die über verschiedene Leitungen mit einer Steuereinheit verbunden ist.

Eine Wägezelle 1 ist als Blackbox dargestellt, in der ein analoger Aufnehmer 2 integriert ist, der in der Wägezelle eingebaut ist. Weiterhin ist in der Wägezelle 1 ein Temperatursensor 3 und ein Parameterspeicher 4 eingebaut.

Die Wägezelle 1 ist für die analogen Messsignale über eine Leitung 5 mit einer Steuereinheit 6 verbunden. Auf diese Weise sollen die analogen Messsignale vorzugsweise von jeder Wägezelle 1 getrennt zur Steuereinheit 6 geführt werden, weil ein analoges Zusammenschalten die Möglichkeiten der Korrektur eines Messsignals verringert.

Weiterhin ist gegebenenfalls eine Leitung 7 von der Wägezelle 1 zur Steuereinheit 6 geführt, über die ein Temperatursignal vom Temperatursensor 3 zur Steuereinheit geschaltet ist. Darüber hinaus ist die Wägezelle 1 über eine Leitung 8 mit der Steuereinheit 6 verbunden, über welche Parametersignale aus dem Parameterspeicher 4 von der Steuereinheit ausgelesen werden. Dabei können die Parametersignale einzeln, und zwar getrennt von den Messsignalen, ausgelesen werden. Als Variante ist ebenfalls das Auslesen der Parametersignale über einen Bus vorteilhaft, aber wiederum getrennt von den Messsignalen. Als weitere Variante für die Übertragung der Parametersignale aus dem internen Parameterspeicher 4 zur Steuereinheit 6 ist auch empfehlenswert, die Parametersignale mit den Messsignalen auf gemeinsamen Leitungen auszulesen.

Das Verfahren ermöglicht nicht nur, dass eine oder mehrere Wägezellen 1 ausgetauscht werden können, sondern dass alle Wägezellen einer Wägeanordnung gleichzeitig getauscht werden können. Dabei liest die Steuereinheit 6 in einem speziellen Konfigurationsmodus aus jeder Wägezelle 1 die Daten der eingeschriebenen Parameter und die Seriennummer aus. Die Seriennummer enthält Informationen über den Typ der Wägezelle, beispielsweise über die Bauform, die Nennlast und die Qualität. Die Daten der Parameter werden in einem Datenspeicher der Steuereinheit 6 dauerhaft gespeichert.

Im Falle der bevorzugten einzelnen Messung der Wägezellen 1 wird im Rahmen der Justage zu jeder Wägezelle 1 ein Nullsignal oder eine Totlast und eine Empfindlichkeitskorrektur oder ein Eckenabgleich in der Steuereinheit gespeichert. Nach dem Anschließen einer neuen Wägezelle 1, dieses könnten im vorliegenden Falle auch sämtliche Wägezellen der Waage sein, liest die Steuereinheit 6 die internen Parameter der neuen Wägezellen ein. Anhand der Seriennummern und weiterer Parameter wie Nennlast, Qualität, Bauform oder Wägezellen-Typ kann festgestellt werden, ob die neuen Wägezellen 1 als Ersatz für die alten Wägezellen geeignet sind.

Der Nullpunkt bei unbelasteter Waage liefert einen Hinweis auf den korrekten mechanischen Einbau. Der Austausch von Wägezellen 1 sollte vorzugsweise in einem internen Speicher der Steuereinheit 6 in Form eines Logbuches registriert werden.

Bei der Fertigung der Wägezellen 1 werden die internen Daten der Parameter nur noch gemessen und nicht mehr korrigiert. Die Daten werden lediglich in den internen Parameterspeicher 4 der Wägezelle 1 geschrieben. Damit entfallen jegliche Abgleichschritte. Im Betrieb liest die Steuereinheit 6 die Daten der Parameter aus dem internen Parameterspeicher 4 aus und korrigiert die Rohwerte anhand dieser Daten. Auf die angegebene Weise können auch Fehler korrigiert werden, die in der Fertigung nicht mehr beeinflussbar sind, beispielsweise ein Linearitätsfehler oder eine Hysterese.

Zur Korrektur von Temperatureinflüssen ist es vorteilhaft, einen Temperatursensor 3 in eine Wägezelle 1 einer Wägeanordnung einzubauen und im Betrieb auszulesen. Eine solche Maßnahme ist im Ergebnis immer noch wirtschaftlicher und kostengünstiger als die eingesparten Kosten, die bei einer aufwendigen Fertigung und einem Abgleich aufzubringen sind. Alternativ kann der Temperatursensor 3 auch außerhalb der Wägezellen 1, aber in deren Nähe angebaut werden.

Aufgrund der mitgeführten Daten der Parameter im internen Parameterspeicher 4 werden die Wägezellen 1 in ihrem Messverhalten sehr viel vergleichbarer, als dies durch Abgleichmaßnahmen erreichbar ist. Das bringt den wesentlichen Vorteil mit sich, dass die Wägezellen 1 getauscht werden können, ohne dabei die Genauigkeit einer Waage oder Wägeanordung zu beeinflussen. Damit ist auch ein Austausch der Wägezellen 1 in einer geeichten Waage denkbar, wobei ein solcher Schritt auf jeden Fall noch der Zustimmung durch die entsprechende Zulassungsbehörde bedarf.

Damit der Austausch von Wägezellen betriebstechnisch gewährleistet ist, müssen spezielle Anforderungen an die Einbausituation der Wägezelle 1 und auch an die Wägezelle selbst erfüllt sein. Dazu gehört, dass die Einbausituation sicherstellen muss, dass die Lasteinleitung in die Wägezelle 1 nicht durch das Ausbauen und Einbauen der Wägezelle verändert wird. Bekanntlich nützt die beste Wägezelle nichts, wenn diese mit einem inkorrekten Gewicht beaufschlagt wird. Hierbei sind insbesondere solche Wägezellen vorteilhaft, die ihre Einbaulage jederzeit beibehalten, also solche, die fest montiert oder fest aufgestellt sind. Sogenannte selbstzentrierende Wägezellen, die Querkräfte durch Schrägstellung ausgleichen, sind für den genannten Zweck weniger geeignet.

Darüber hinaus muss die Konstruktion der Wägeanordnung für eine reproduzierbare Lasteinleitung sorgen, d. h. insbesondere Aufstellflächen müssen horizontal und eben sein und Lastträger müssen ausreichend steif sein. Die Wägezelle muss weiterhin unempfindlich gegen Querkräfte und, soweit der Einbau das zulässt, unempfindlich gegen ein Verdrehen sein. Oder anders ausgedrückt, die optimale Lasteinleitung reproduziert den Zustand, der während der Prüfung der Wägezelle angetroffen wurde.

Weitere wesentliche Anforderungen bestehen darin, dass die Steuereinheit 6 in der Lage ist, die individuellen Daten der Parameter aus dem internen Parameterspeicher 4 jeder Wägezelle 1 auszulesen. Für eine solche Maßnahme muss entweder ein einzelner Zugriff auf jeden Parameterspeicher möglich sein oder die Parameterspeicher müssen über gemeinsame Leitungen adressierbar ausgelesen werden können.

Die Parameterspeicher 4 können separat von der eigentlichen Technik der Aufnehmer 2 der Wägezelle 1 ausgeführt und über eine Schnittstelle erreichbar sein. Als Ausführungsform einer solchen Schnittstelle bieten sich die sogenannten One-Wire-Chips als vorteilhaft an.

In einer alternativen Ausführungsform kann der Parameterspeicher 4 auch ganz oder teilweise Leitungen der analogen Messsignale mitbenutzen. Das Auslesen der Daten der Parameter aus dem Parameterspeicher 4 geschieht dann durch die bekannte intelligente Modulation der analogen Messsignale.

Eine Korrektur der Temperatureinflüsse oder des Temperaturverhaltens eines Nullsignals Tₖ₀ oder des Temperaturverhaltens eines Kennwerts T_{kc} kann vorteilhaft in einer Summenschaltung der Wägezellen 1 erfolgen. Das hat den entscheidenden Vorteil, dass nur ein Temperatursensor 3 in einer Wägezelle 1 pro Wägezellenanordung vorgesehen und ausgelesen werden muss. Eine funktionierende Korrektur von Linearitätsfehlern, Kriechen und Hysterese verlangt zwingend die individuelle Messung und Korrektur jeder einzelnen Wägezelle.
Dazu muss die Steuereinheit 6 die Wägezellen 1 entweder sequenziell messen, oder die Steuereinheit muss für jede Wägezelle einen eigenen Messkanal aufweisen.

## Patentansprüche

1. Verfahren zum Austauschen von Wägezellen (1) in einer geeichten Wägeanordnung mit mehreren Wägezellen, wobei die Wägezellen (1) mit einer Steuereinheit (6) verbunden sind und die Wägezellen die zu messenden Gewichtswerte in der Form von Spannungen übertragen, die in der Steuereinheit (6) entsprechende Zählerwerte hervorrufen, und jede Wägezelle (1) einen Satz interner relevanter Parameter pro Wägezelle für einen Parameterspeicher (4) aufweist, wobei als Wägezellen (1) analoge Wägezellen eingesetzt werden und die Wägezellen mit der Steuereinheit (6) über mindestens ein Bussystem verbunden werden, **dadurch gekennzeichnet, dass** bei einem Austausch der Wägezellen (1) eingeschriebene Daten interner Parameter der neuen Wägezellen (1) in der Wägeanordnung in dem jeweils integrierten internen Parameterspeicher (4) der Wägezellen auslesbar zur Verfügung gestellt werden, dass nach dem Austausch der Wägezellen (1) von der Steuereinheit (6) aus dem integrierten internen Parameterspeicher (4) der jeweiligen Wägezellen die Daten der internen Parameter und Seriennummern ausgelesen und in der Steuereinheit (6) dauerhaft gespeichert werden und dass die Steuereinheit (6) anhand der Daten der internen Parameter aus dem integrierten Parameterspeicher (4) der eingetauschten Wägezellen (1) die in Form von Spannungen übertragenen Gewichtswerte dieser Wägezellen im Betrieb korrigiert.

2. Verfahren nach Anspruch 1, **dadurch gekennzeichnet, dass** als interne Parameter Daten für Linearitätskorrektur der Wägezellen (1) ausgelesen werden.

3. Verfahren nach Anspruch 1, **dadurch gekennzeichnet, dass** als interne Parameter Daten für Kriechen der Wägezellen (1) ausgelesen werden.

4. Verfahren nach Anspruch 1, **dadurch gekennzeichnet, dass** als interne Parameter Daten für Hysterese der Wägezellen (1) ausgelesen werden.

5. Verfahren nach Anspruch 1, **dadurch gekennzeichnet, dass** als interne Parameter Daten für das Temperaturverhalten eines Nullsignals (Tₖ₀) der Wägezellen (1) ausgelesen werden.

6. Verfahren nach Anspruch 1, **dadurch gekennzeichnet, dass** als interne Parameter Daten für das Temperaturverhalten eines Kennwerts (**T_{kc}**) der Wägezellen (1) ausgelesen werden.

7. Verfahren nach Anspruch 1, **dadurch gekennzeichnet, dass** zeitgleich mit der Seriennummer eingeschriebene Parameter über den Typ der Wägezellen (1) ausgelesen werden.

8. Verfahren nach Anspruch 7, **dadurch gekennzeichnet, dass** als eingeschriebene Parameter über den Typ der Wägezellen (1) Daten einer Bauform ausgelesen werden.

9. Verfahren nach Anspruch 7, **dadurch gekennzeichnet, dass** als eingeschriebene Parameter über den Typ der Wägezellen Daten einer Nennlast ausgelesen werden.

10. Verfahren nach Anspruch 7, **dadurch gekennzeichnet, dass** als eingeschriebene Parameter über den Typ der Wägezellen (1) Daten eines Qualitätsstandards ausgelesen werden.

11. Verfahren nach Anspruch 1, wobei ein zusätzlicher Schritt der Justage durchgeführt wird, wobei bei der einzelnen Messung der Wägezellen (1) während der Justage zu jeder Wägezelle Totlast und Empfindlichkeitskorrektur oder Eckenabgleich gespeichert werden.

12. Verfahren nach Anspruch 11, **dadurch gekennzeichnet, dass** bei der Justage und unbelasteter Wägeanordnung anhand eines Nullsignals der korrekte mechanische Einbau überprüft und angezeigt wird.

13. Verfahren nach Anspruch 1, **dadurch gekennzeichnet, dass** ein Messsignal jeder Wägezelle (1) getrennt von anderen Signalen zur Steuereinheit (6) geführt wird.

14. Verfahren nach Anspruch 1, **dadurch gekennzeichnet, dass** ein Temperatursignal analog oder digital zusammen mit Parametersignalen zur Steuereinheit (6) geführt wird.

15. Verfahren nach Anspruch 1, **dadurch gekennzeichnet, dass** die Parametersignale einzeln und getrennt vom Messsignal zur Steuereinheit (6) geführt werden.

16. Verfahren nach Anspruch 1, **dadurch gekennzeichnet, dass** die Parametersignale über einen Bus und getrennt vom Messsignal zur Steuereinheit (6) geführt werden.

17. Verfahren nach Anspruch 1, **dadurch gekennzeichnet, dass** die Parametersignale gemeinsam mit dem Messsignal auf gemeinsamen Leitungen zur Steuereinheit (6) geführt werden.

18. Verfahren nach Anspruch 1, **dadurch gekennzeichnet, dass** der Austausch der Wägezellen (1) in einem internen Speicher der Steuereinheit (6) als Logbuch registriert wird.

19. Geeichte Wägeanordnung mit mehreren austauschbaren Wägezellen, wobei die Wägezellen mit einer Steuereinheit (6) verbunden sind und die Wägezellen die zu messenden Gewichtswerte in der Form von Spannungen übertragen, die in der Steuereinheit (6) entsprechende Zählerwerte hervorrufen, und jede Wägezelle (1) einen Satz interner relevanter Parameter pro Wägezelle der Wägeanordnung für einen Parameterspeicher (4) aufweist, wobei als Wägezellen (1) analoge Wägezellen eingebaut sind und die Wägezellen (1) mit der Steuereinheit (6) über mindestens ein Bussystem verbunden sind, **dadurch gekennzeichnet, dass** in die Wägezellen (1) jeweils der Parameterspeicher (4) integriert ist, dass der integrierte Parameterspeicher (4) als abfragbarer Speicher mit eingeschriebenen Daten der internen Parameter der Wägezelle (1) ausgelegt ist und dass jede Wägezelle (1) für die Übertragung mindestens eines Messsignals, Parametersignals oder Temperatursignals mit der Steuereinheit (6) verbunden ist und dass die Steuereinheit (6) dafür eingerichtet ist, anhand der Daten der internen Parameter aus dem integrierten Parameterspeicher (4) der eingetauschten Wägezellen (1) die in Form von Spannungen übertragenen Gewichtswerte dieser Wägezellen im Betrieb zu korrigieren.

20. Vorrichtung nach Anspruch 19, **dadurch gekennzeichnet, dass** der Parameterspeicher (4) als Festwertspeicher oder read-only-memory ausgelegt ist.

21. Vorrichtung nach Anspruch 19, **dadurch gekennzeichnet, dass** der Parameterspeicher (4) als Festwertspeicher separat von einer Aufnehmervorrichtung (2) der Wägezelle (1) ausgeführt und über eine Schnittstelle mit der Steuereinheit (6) verbunden ist.

22. Vorrichtung nach Anspruch 19, **dadurch gekennzeichnet, dass** mindestens in einer Wägezelle (1) der Wägeanordnung ein Temperatursensor (3) eingebaut ist.

## Claims

1. Method for replacing weighing cells (1) in a calibrated weighing arrangement having a plurality of weighing cells, the weighing cells (1) being connected to a control unit (6), and the weighing cells transmitting the weight values to be measured in the form of voltages which give rise to corresponding counter values in the control unit (6), and each weighing cell (1) having a set of internal relevant parameters for each weighing cell for a parameter memory (4), analogue weighing cells being used as weighing cells (1), and the weighing cells being connected to the control unit (6) via at least one bus system, **characterized in that**, when replacing the weighing cells (1), data which are written in and relate to internal parameters of the new weighing cells (1) in the weighing arrangement are provided in the respective integrated internal parameter memory (4) of the weighing cells in such a manner that they can be read, **in that** the data relating to the internal parameters and serial numbers are read from the integrated internal parameter memory (4) of the respective weighing cells by the control unit (6), after the weighing cells (1) have been replaced, and are permanently stored in the control unit (6), and **in that** the control unit (6) uses the data relating to the internal parameters from the integrated parameter memory (4) of the replaced weighing cells (1) to correct the weight values of these weighing cells during operation, which weight values are transmitted in the form of voltages.

2. Method according to Claim 1, **characterized in that** data for correcting the linearity of the weighing cells (1) are read as internal parameters.

3. Method according to Claim 1, **characterized in that** data for creepage of the weighing cells (1) are read as internal parameters.

4. Method according to Claim 1, **characterized in that** data for hysteresis of the weighing cells (1) are read as internal parameters.

5. Method according to Claim 1, **characterized in that** data for the temperature behaviour of a zero signal (Tₖ₀) of the weighing cells (1) are read as internal parameters.

6. Method according to Claim 1, **characterized in that** data for the temperature behaviour of a characteristic value (T_{kc}) of the weighing cells (1) are read as internal parameters.

7. Method according to Claim 1, **characterized in that** parameters which are written in and relate to the type of weighing cells (1) are read simultaneously with the serial number.

8. Method according to Claim 7, **characterized in that** data relating to a design are read as parameters which are written in and relate to the type of weighing cells (1).

9. Method according to Claim 7, **characterized in that** data relating to a nominal load are read as parameters which are written in and relate to the type of weighing cells.

10. Method according to Claim 7, **characterized in that** data relating to a quality standard are read as parameters which are written in and relate to the type of weighing cells (1).

11. Method according to Claim 1, an additional step of adjustment being carried out, the dead load and sensitivity correction or corner adjustment being stored for each weighing cell during adjustment during the individual measurement of the weighing cells (1).

12. Method according to Claim 11, **characterized in that**, during adjustment and with an unloaded weighing arrangement, the correct mechanical installation is checked using a zero signal and is displayed.

13. Method according to Claim 1, **characterized in that** a measurement signal from each weighing cell (1) is passed to the control unit (6) separately from other signals.

14. Method according to Claim 1, **characterized in that** a temperature signal is passed to the control unit (6), together with parameter signals, in analogue or digital form.

15. Method according to Claim 1, **characterized in that** the parameter signals are passed to the control unit (6) individually and separately from the measurement signal.

16. Method according to Claim 1, **characterized in that** the parameter signals are passed to the control unit (6) via a bus and separately from the measurement signal.

17. Method according to Claim 1, **characterized in that** the parameter signals are passed to the control unit (6), together with the measurement signal, on common lines.

18. Method according to Claim 1, **characterized in that** the replacement of the weighing cells (1) is recorded in an internal memory of the control unit (6) as a logbook.

19. Calibrated weighing arrangement having a plurality of replaceable weighing cells, the weighing cells being connected to a control unit (6), and the weighing cells transmitting the weight values to be measured in the form of voltages which give rise to corresponding counter values in the control unit (6), and each weighing cell (1) having a set of internal relevant parameters for each weighing cell of the weighing arrangement for a parameter memory (4), analogue weighing cells being installed as weighing cells (1), and the weighing cells (1) being connected to the control unit (6) via at least one bus system, **characterized in that** the parameter memory (4) is respectively integrated in the weighing cells (1), **in that** the integrated parameter memory (4) is designed as a memory which can be queried and contains data which have been written in and relate to the internal parameters of the weighing cell (1), and **in that** each weighing cell (1) is connected to the control unit (6) in order to transmit at least one measurement signal, parameter signal or temperature signal, and **in that** the control unit (6) is set up to use the data relating to the internal parameters from the integrated parameter memory (4) of the replaced weighing cells (1) to correct the weight values of these weighing cells during operation, which weight values are transmitted in the form of voltages.

20. Apparatus according to Claim 19, **characterized in that** the parameter memory (4) is in the form of a read-only memory.

21. Apparatus according to Claim 19, **characterized in that** the parameter memory (4) is in the form of a read-only memory, which is separate from a transducer apparatus (2) of the weighing cell (1), and is connected to the control unit (6) via an interface.

22. Apparatus according to Claim 19, **characterized in that** a temperature sensor (3) is installed at least in one weighing cell (1) of the weighing arrangement.

## Revendications

1. Procédé pour le remplacement de cellules de pesage (1) dans un système de pesage étalonné comportant une pluralité de cellules de pesage, dans lequel les cellules de pesage (1) sont reliées à une unité de commande (6) et les cellules de pesage transmettent les valeurs de poids à mesurer sous la forme de tensions qui conduisent à des valeurs de comptage correspondantes dans l'unité de commande (6), et chaque cellule de pesage (1) comprend un enregistrement de paramètres internes pertinents par cellule de pesage pour une mémoire de paramètres (4), dans lequel des cellules de pesage analogiques sont utilisées en tant que cellules de pesage (1) et les cellules de pesage sont reliées à l'unité de commande (6) par l'intermédiaire d'au moins un système de bus, **caractérisé en ce que** lors d'un remplacement des cellules de pesage (1), des données écrites de paramètres internes des cellules de pesage neuves (1) sont rendues disponibles en lecture dans le système de pesage dans la mémoire de paramètres interne intégrée respective (4) des cellules de pesage, **en ce que**, après le remplacement des cellules de pesage (1), les données des paramètres internes et les numéros de série sont lus par l'unité de commande (6) depuis la mémoire de paramètres interne intégrée (4) des cellules de pesage respectives et sont stockés de manière permanente dans l'unité de commande (6), et **en ce que** l'unité de commande (6) corrige les valeurs de poids, transmises sous la forme de tensions, de ces cellules de pesage en fonctionnement, sur la base des données des paramètres internes provenant de la mémoire de paramètres intégrée (4) des cellules de pesage (1) de remplacement.

2. Procédé selon la revendication 1, **caractérisé en ce que** des données de correction de linéarité des cellules de pesage (1) sont lues en tant que paramètres internes.

3. Procédé selon la revendication 1, **caractérisé en ce que** des données de fluage des cellules de pesage (1) sont lues en tant que paramètres internes.

4. Procédé selon la revendication 1, **caractérisé en ce que** des données d'hystérésis des cellules de pesage (1) sont lues en tant que paramètres internes.

5. Procédé selon la revendication 1, **caractérisé en ce que** des données de comportement en température d'un signal de zéro (Tₖ₀) des cellules de pesage (1) sont lues en tant que paramètres internes.

6. Procédé selon la revendication 1, **caractérisé en ce que** des données de comportement en température d'une grandeur caractéristique (T_{kc}) des cellules de pesage (1) sont lues en tant que paramètres internes.

7. Procédé selon la revendication 1, **caractérisé en ce que** des paramètres concernant le type des cellules de pesage (1) sont lues en même temps que le numéro de série.

8. Procédé selon la revendication 7, **caractérisé en ce que** des données de conception sont lues en tant que paramètres écrits concernant le type des cellules de pesage (1).

9. Procédé selon la revendication 7, **caractérisé en ce que** des données de charge nominale sont lues en tant que paramètres écrits concernant le type des cellules de pesage (1).

10. Procédé selon la revendication 7, **caractérisé en ce que** des données de norme de qualité sont lues en tant que paramètres écrits concernant le type des cellules de pesage (1).

11. Procédé selon la revendication 1, dans lequel on effectue une étape supplémentaire d'ajustement consistant à stocker la charge morte et la correction de sensibilité ou le réglage d'angle pendant l'ajustement de chaque cellule de pesage dans la mesure individuelle des cellules de pesage (1).

12. Procédé selon la revendication 11, **caractérisé en ce que**, lors de l'ajustement et lorsque le système de pesage n'est pas en charge, l'installation mécanique correcte est vérifiée et affichée sur la base d'un signal de zéro.

13. Procédé selon la revendication 1, **caractérisé en ce qu'**un signal de mesure de chaque cellule de pesage (1) séparé d'autres signaux est acheminé vers l'unité de commande (6).

14. Procédé selon la revendication 1, **caractérisé en ce qu'**un signal de température est acheminé vers l'unité de commande (6) de manière analogique ou numérique en association avec des signaux de paramètres.

15. Procédé selon la revendication 1, **caractérisé en ce que** les signaux de paramètres sont acheminés vers l'unité de commande (6) de manière individuelle et séparée du signal de mesure.

16. Procédé selon la revendication 1, **caractérisé en ce que** les signaux de paramètres sont acheminés vers l'unité de commande (6) par l'intermédiaire d'un bus et séparément du signal de mesure.

17. Procédé selon la revendication 1, **caractérisé en ce que** les signaux de paramètres sont acheminés vers l'unité de commande (6) en association avec le signal de mesure sur des conducteurs communs.

18. Procédé selon la revendication 1, **caractérisé en ce que** le remplacement des cellules de pesage (1) est enregistré dans une mémoire interne de l'unité de commande (6) en tant que journal de bord.

19. Système de pesage étalonné comportant une pluralité de cellules de pesage pouvant être remplacées, dans lequel les cellules de pesage sont reliées à une unité de commande (6) et les cellules de pesage transmettent les valeurs de poids à mesurer sous la forme de tensions qui conduisent à des valeurs de comptage correspondantes dans l'unité de commande (6), et chaque cellule de pesage (1) comprend un enregistrement de paramètres internes pertinents par cellule de pesage pour une mémoire de paramètres (4), dans lequel des cellules de pesage analogiques sont utilisées en tant que cellules de pesage (1) et les cellules de pesage (1) sont reliées à l'unité de commande (6) par l'intermédiaire d'au moins un système de bus, **caractérisé en ce que** la mémoire de paramètres (4) est intégrée dans les cellules de pesage (1) respectives, **en ce que** la mémoire de paramètres intégrée (4) est réalisée sous la forme d'une mémoire interrogeable contenant des données écrites des paramètres internes de la cellule de pesage (1) et **en ce que** chaque cellule de pesage (1) est reliée à l'unité de commande (6) pour la transmission d'un moins un signal de mesure, un signal de paramètre ou un signal de température et **en ce que** l'unité de commande (6) est apte à corriger les valeurs de poids, transmises sous la forme de tensions, de ces cellules de pesage en fonctionnement, sur la base des données des paramètres internes provenant de la mémoire de paramètres intégrée (4) des cellules de pesage (1) de remplacement.

20. Dispositif selon la revendication 19, **caractérisé en ce que** la mémoire de paramètres (4) est réalisée sous la forme d'une mémoire morte ou d'une mémoire en lecture seule.

21. Dispositif selon la revendication 19, **caractérisé en ce que** la mémoire de paramètres (4) est réalisée sous la forme d'une mémoire morte séparée d'un dispositif de lecture (2) de la cellule de pesage (1) et **en ce qu'**elle est reliée à l'unité de commande (6) par l'intermédiaire d'une interface.

22. Dispositif selon la revendication 19, **caractérisé en ce qu'**un capteur de température (3) est installé dans au moins une cellule de pesage (1) du dispositif de pesage.
